# EUROPEAN PATENT APPLICATION

(11) **EP 2 345 334 A1**
(43) Date of publication of application: **20.07.2011**
(21) Application number: 11001957.7
(22) Date of filing: 29.06.2004
(51) Int. Cl.: A23L 1/221, A23L 1/226, A23L 1/30, C11C 3/00

(54) **Full-bodied taste enhancer containing product of decomposition of long-chain highly unsaturated fatty acid or containing extract therefrom**

(30) Priority: 09.07.2003 JP 2003193979
(62) Divisional of application: 04746600.8
(71) Applicant: J-Oil Mills, Inc., Tokyo 104-0044 (JP)
(72) Inventor: Yamaguchi, Susumu, Yokohama-shi Kanagawa 2300053 (JP); Baba, Keiko, Yokohama-shi Kanagawa 2300053 (JP); Tashima, Ikukazu, Yokohama-shi Kanagawa 2300053 (JP); Matsuzaki, Narihide, Yokohama-shi Kanagawa 2300053 (JP); Kawaguchi, Hirokazu, Kawasaki-shi Kanagawa 2108681 (JP); Kuroda, Motonaka, Kawasaki-shi Kanagawa 2108681 (JP)
(74) Representative: Strehl Schübel-Hopf & Partner

(57) **Abstract**

The purpose of the present invention is to provide a body taste improver comprising a small amount of fat and oil, but significantly showing body taste, i.e., a body taste improver with a high titer. The high titer of the improver will reduce an amount of the fat and oil to be added and calorie as well, and will enable to use the body taste improver in foods that originally contain little fat and oil, such as Japanese-style clear soup and soybean soup.
Thus, the present invention is related to a body taste improver comprising decomposed substances of a long-chain highly unsaturated fatty acid and/or an ester thereof, to a body taste improver comprising an extract of decomposed substances of a long-chain highly unsaturated fatty acid and/or an ester thereof, and to a food comprising said body taste improver.

## Description

### Technical Field

The present invention relates to a body taste improver comprising decomposed substances or their extract of a long-chain highly unsaturated fatty acid and/or an ester thereof, and a food comprising the improver.

### Background of the Invention

Arachidonic acid (cis-5,8,11,14-eicosatetraenoic acid) belongs to long-chain highly unsaturated (polyunsaturated) fatty acids, and exists in a phospholipid derived from animal organs or tissues. This fatty acid is an essential one, and is very important as a precursor for the synthesis of prostaglandin, thromboxane, leukotriene, etc

Attempts have been made to add the long-chain highly unsaturated fatty acids such as arachidonic acid and esters thereof for enrichment of nutrition and provision of various physiological functions in view of the above remarkable functions of arachidonic acid. However, there is no disclosure of technology about use of the long-chain highly unsaturated fatty acid for the purpose of improving taste such as a body taste of vegetable fat and oil, or no description to suggest a possibility to do that.

There has been a problem that the additi on of the long-chain highly unsaturated fatty acid to foods would deteriorate their taste due to odor smell reversion flavor derived from oxidized decomposition of the fatty acid. Many means have been tried to solve the problem.

One of the those means is disclosed in the Japanese Patent Application laid open Sho 63 (1988)-44843 wherein a highly unsaturated fatty acid is included in an inner oil phase of an oil-in-water-in-oil-type emulsion composition. The Japanese Patent Application laid open Hei 6 (1994)-172782 discloses technology of pulverizing fat and oil comprising a highly unsaturated fatty acid. The Japanese Patent Application laid open Hei 9 (1997)-176679 discloses technology of mixing anti-oxidant powder with a pulverized unsaturated fatty acid. The Japanese Patent Application laid open Hei 9 (1997)-263784 discloses technology of mixing δ-tocopherol with fat and oil comprising a polyunsaturated fatty acid. The Japanese Patent Application laid open Hei 11 (1999)-12592 discloses technology of adding soybean source to fish fat and oil comprising a highly unsaturated fatty acid.

The Japanese Patent Application laid open 2001-78702 discloses as an example of application of highly unsaturated fatty acids in the field of food a seasoning having enriched mildness, taste, and after taste, which is prepared by mixing fat and oil with extract into an oil-in-water-type emulsion. Fish oil or fat and oil comprising the fish oil is disclosed as an example of the above fat and oil, including one wherein 10 % by weight or more of the fish oil is made of n-3 (ω-3) highly unsaturated fatty acids.

It is preferred to use a fatty acid ester of polyglycerine as emulsifier and to use extract wherein an antioxidant such as carnosine and anserine for preventing oxidization of the fat and oil. No oxidization treatment such as heating treatment is not carried out in a process for the reparation of the seasoning. Examples of foods on which the effect of the seasoning is significantly performed include surimi-based products, fish and processed fish products.

The Japanese Patent No.3220155 discloses a flavoring composition which is prepared by oxidization of fatty acids except milk fat and is characterized by comprising at least one of polyunsaturated fatty acids with n-3 unconjugated double bond in an amount of more than 0.01 % by weight. This flavoring composition comprises sweet and creamy note that is remarkably recognized in butter-like flavor. In order to obtain such note, the fat and oil need to be subjected to oxidization treatment, which has to be carried out under control during a process in the presence of an anti-oxidant that will slightly delay the oxidization. As the flavor generated in the oxidization treatment contains volatile components, the oxidization treatment is preferred to do in a closed system. Actually, the oxidization treatment is done by using a reflux condenser in an example. It is described that the flavoring composition is particularly suitable in use for adding flavor to foods that are advantageously desired to have butter flavor.

The Japanese Patent Application laid open Hei 9 (1997) -143489 discloses an invention relating to a method for extracting flavor from animal and plant materials (Patent Document 1). However, the purpose of the above invention is to produce flavor and aroma components having an excellent stability and enriched flavor while preventing disadvantageous changes of its properties and deterioration that include the deterioration of flavor due to factors such as heat, light and oxygen during the treatment and generation of off-flavor due to oxidative decomposition of oil. Thus, an aging-auxiliary material is added to and mixed with the animal and plant materials beforehand so that their disadvantageous change can be reduced in a super critical state and the like after an aging process. As one of the examples of the aging process is listed a heat aging at a relatively low temperature range of about 10°C ∼60°C, preferably of about 30°C ∼50°C. There is no description about any specific compound that is contained in the extracted flavor.

The Japanese Patent Application laid open 2001 -269142 discloses an invention relating to "roux" (source) with a fat and oil content of 10% by weight or less, which comprises starch and/or other thickening agents and aldehydes (Patent Document 2). The purpose of the invention is to provide the roux showing the same body taste particular to fat and oil as that obtained by use of a large amount of fat and oil. Thus, the purpose of the invention is to solve a problem inherent in roux, and therefore it needs the starch and/or other thickening agents to maintain its texture. Furthermore, since another purpose of the invention is to provide a low-calorie product, its fat and oil content has to be 10% by weight or less. Although the aldehydes include that of a linear saturated and unsaturated fatty acid aldehydes, only 2,4-decandienal is described as an example of the unsaturated fatty acid aldehydes.

Further, the following Non-Patent Document 1 describes flavor profiles of synthesized volatile compounds, referring to the possibility that oily taste may be given by unsaturated fatty acid aldehydes such as 2-nonenal and 2,4-decadienal, and lactone.
[Patent Document 1] Japanese Patent Application laid open Hei 9 (1997) -143489
[Patent Document 2] Japanese Patent Application laid open 2001 -269142
[Non-Patent Document 1] Riichiro Usuki, "Study on deterioration and umami taste of edible fat and oil," Oil Chemistry, Vol. 30, No.9, pp.548-552 (1981).

### Summary of the Invention

In the field of food, there are some kinds of foods that require "body taste" and "rich or thick taste", such as fried foods including pork cutlet, fat and oil containing foods including curry source and "gyo-za" (Chinese-style pork dumpling)." Conventionally, flavor has been added, or animal fat and oil have been used alone or in combination with vegetable fat and oil in order to give the above tastes to those foods.

However, there is a problem that the added flavor is volatiliz ed during a heating treatment so that the given body taste can not be maintained. There is also a concern that cholesterol or saturated fatty acids contained in the animal fat and oil may adversely affect health. On the other hand, since the vegetable fa t and oil contain a small amount of cholesterol or saturated fatty acids, foods cocked with the vegetable fat and oil would taste simple or plain, making the foods that need body taste unsatisfactory.

It is therefore desired to provide fat and oil comprising no cholesterol and a small amount of saturated fatty acid, but having body taste.

Furthermore, it is desired to provide a body taste improver comprising a small amount of fat and oil, but significantly showing a body taste, i.e., a body taste improver with a high titer. The reasons for the above desire are that such body taste improver has advantages that its high titer will reduce an amount of the fat and oil to be added and calorie as well, and that it will enable to use the body taste improver in foods that originally contain little fat and oil, such as Japanese-style clear soup and soybean soup.

The present inventors have studied to solve the above problems, and finally found that addition of decomposed substances or their extract of a long-chain highly unsaturated fatty acid and/or an ester thereof, which have been considered for a long time a causative agent of putrefactive smell of meat and the like and off-flavor, will improve body taste and increase the original tastes of the foods so as to complete the present invention.

Thus, the present invention is related to a body taste improver comprising decomposed substances of a long-chain highly unsaturated fatty acid and/or an ester thereof. The present invention further relates to a body taste improver comprising an extract of decomposed substances of a long-chain highly unsaturated fatty acid and/or an ester thereof.

The "body improver" in the present specification means an agent that effects the advantages of the present invention, i.e., an agent that newly provides or improves a significant "body taste" or "rich or thick taste" of the foods to which it is added. The "body taste" will be appreciated by a sensory test described in the examples of the present specification.

The "long-chain highly unsaturated fatty acid" in the present specification means a fatty acid having 20 or more of carbon atoms and 3 or more of double bonds in the case of n-3 long-chain highly unsaturated fatty acids, and a fatty acid having 18 or more of carbon atoms and 3 or more of double bonds in the case of n-6 long-chain highly unsaturated fatty acids. A long-chain highly unsaturated fatty acid having 20∼24 carbon atoms and 4∼6 double bonds is preferred in both cases. Examples of the n-6 long-chain highly unsaturated fatty acids include γ-linolenic acid, arachidonic acid (AA) and docosatetraenoic acid (DTA), arachidonic acid being preferable. Examples of the n-3 long-chain highly unsaturated fatty acids include docosahexaenoic acid (DHA) and eicosapentaenoic acid (EPA).

There is no limitation on an origin of the long -chain highly unsaturated fatty acid and its ester used in the present invention such as arachidonic acid. Those skilled in the art may optionally use those derived from various animals and vegetables, bacteria and algae that are commercially available.

For example, Japanese Patent Applications laid open Hei 10 (1998) -70992 and Hei 10 (1998) -191886 disclose edible fat and oil derived from bacteria, which comprises a lot of arachidonic acid in a form of triglyceride. The arachidonic acid may be therefore obtained form said edible fat and oil.

It is also possible to mix and use together two or more kinds of the long-chain highly unsaturated fatty acids, or the long-chain highly unsaturated fatty acids that have different origins but belong to the same kind.

There is no limitation on structure and preparation of the ester of the long-chain highly unsaturated fatty acid, and monohydric and polyhydric alcohols may be used as alcohol that constitutes the above ester. Glycerol is one of the preferred examples of the polyhydric alcohols in view of safety and cost. The glycerol will constitute triglyceride, diglyceride or monoglyceride. Other fatty acids besides the long-chain highly unsaturated fatty acid may be contained as fatty acids that constitute the ester of the present invention.

There is no limitation on a method to prepare the decomposed substances of the long-chain highly unsaturated fatty acid and/or the ester thereof in the body taste improver of the present invention, and decomposition treatment may be done by any method known to those skilled in the art. However, it is preferable to use oxidatively decomposed substances of the long-chain highly unsaturated fatty acid and/or the ester thereof in the body taste improver of the present invention so that the advantages of the present invention can be efficiently demonstrated. There is no limitation on a method to prepare the oxidatively decomposed substances. However, it is preferable to heat the long-chain highly unsaturated fatty acid and/or the ester thereof in view of stability and cost so that the oxidatively decomposed substances may be industrially produced without difficulty.

Although the treatment of decomposition may be done directly on the long-chain highly unsaturated fatty acid and/or the ester thereof, it is conveniently done on a fat and oil composition comprising them. There is no limitation on a content of the long-chain highly unsaturated fatty acid and/or the ester thereof in the fat and oil composition, and it may be mixed with other foods such as vegetable oil. However, if the content is too small, miscellaneous tastes derived from the other components may adversely affect the present invention. Accordingly, the body taste improver of the present invention is prepared by decomposition of materials that comprises preferably 1 % by weight or more, more preferably 10% by weight or more of the long-chain highly unsaturated fatty acid and/or an ester thereof.

Accordingly, the present invention also relates to a body taste improver consisting of decomposed substances of fat and oil composition comprising the long-chain highly unsaturated fatty acid and/or the ester thereof in an amount of 1% by weight or more.

The heating treatment may be usually carried out at 40°C ∼200°C, preferably 80°C ∼180°C, for 0.1∼240 hours, preferably 0.5∼72 hours. In the case where the heating should be done under 100°C, it is possible to prevent overheating up to 100°C or more by adding of the long-chain highly unsaturated fatty acid and/or the ester thereof or the fat and oil composition comprising them to water and heating the resulting mixture.

As already mentioned, the present invention relates to the body taste improver comprising the extract of the decomposed substances of the long-chain highly unsaturated fatty acid and/or the ester thereof. It further relates to a body taste improver consisting of an extract of decomposed substances of fat and oil composition comprising a long-chain highly unsaturated fatty acid and/or an ester thereof in an amount of 1% by weight or more.

The "extract of decomposed substances" in the present specification means materials obtained by extraction of the decomposed substances of the long-chain highly unsaturated fatty acid and/or the ester thereof, and the fat and oil comprising them. Extraction may be done by any method known to those skilled in the art, such as extraction with water, hydrous ethanol, propylene glycol, super critical or sub critical carbon dioxide, or vacuum steam distillation.

It is desirable that the water content in the hydrous ethanol is 50% by weight or less, and preferably 30% by weight or less.

The extraction with propylene glycol, water or hydrous ethanol is preferable in view of extraction cost and the extraction with super critical or sub critical carbon dioxide, or vacuum steam distillation is preferable in view of extraction efficiency.

It is desirable that the content of fat and oil in the extract of the decomposed substances thus prepared is 20 % by weight or less.

Use of the extract of the decomposed substances of the long-chain highly unsaturated fatty acid and/or the ester thereof is advantageous because the extraction such as distillation will increase concentration of the decomposed substances so as to strengthen the effects of the body taste improver (or to heighten its titer) and because decrease of the oil content due to the distillation treatment will expand its application even in foods containing originally little fat and oil such as Japanese-style clear soup, soybean soup, consomme and Chinese-style soup.

The decomposed substances or their extract of the long-chain highly unsaturated fatty acid prepared in the above treatment may be mixed with dextrin and the like and subjected to lyophilization to be used in a form of concentrate or capsule.

The specific components comprised in the decomposed substances or their extract in the present invention include aldehydes such as pentanal, hexanal, 2-heptenal, 2-octenal, 2-nonenal, 4-nonenal, 2,4-nonadenal, 2,4-decadienal, 2,5-undecadienal, 2,4,7-decatrienal, and 2,4,7-tridecatrienal; ketones such as 2-heptanone, 3-octanone, 2-octanone, 3-octen-2-one, 2,3-octanedione, and 4-nonanone; alcohols such as 1-octen-3-ol, 2-methyle-3-octanol, and 1,2-heptanediol.

Among the above decomposed substances or their extract, desirable are those comprising aldehydes having preferably 10-15 carbon atoms, more preferably 11-15 carbon atoms, much more preferably 13-15 carbon atoms, especially aldehydes having two or more of double bonds. Alternatively, preferable are those comprising unsaturated aldehydes having three or more of double bonds are preferable, especially 2,4,7-decatrienal and/or 2,4,7-tridecatrienal.

Each component in the decomposed substances or their extract of the long-chain highly unsaturated fatty acid and/or the ester thereof may be identified by GC or GC-MS analysis known to those skilled in the art, as shown in the following examples.

The present invention also relates to foods comprising the above body taste improver. There is no limitation on the subject foods including not only fat-containing foods such as soup, curry source, Chinese-style pork dumplings and steamed Chinese-style pork dumplings, but also foods hardly contai ning fat and oil such as Japanese-style clear soup, soybean soup, connsome, and Chinese-style soup. The foods according to the present invention are provided with a significant body taste and thickness or rich taste by the body taste improver comprised th erein.

### Best Mode for Carrying Out the Invention

The present invention will be explained in more detail with reference to the following examples, which should not be construed as limiting a technical scope of the present invention. The term "%" in the following examples mean "% by weight" unless otherwise noted.

### Long-chain highly unsaturated fatty acid used in the examples:

Arachidonic acid (AA): 98% purity, distributed by Wako Chemicals Ltd. and manufactured by ICN;
AA-containing triglyceride (AATG): 40-45 % purity, distributed by Nakarai Tesk Ltd. and manufactured by Suntory Ltd;
γLinolenic acid: 99% purity, manufactured by SIGMA Co.;
DHA27G : DHA content 27%, manufactured by NIPPON CHEMICAL FEED CO., LTD.;
DHA: 98% purity, manufactured by SIGMA Co.;
Pure light oil (PL oil): low linolenic acid-containing rape seed oil, manufactured by Ajinomoto Co., Inc.

### Sensory test:

In the sensor test, the improvement of body taste refers to increase of "strength of taste" and "strength of aftertaste" without deterioration of "goodness of taste" and "goodness of aftertaste", respectively.

Panelists: n=7

The symbols used in the following Tables showing the test results means as follows:
"x": weaker or worse than control;
"Δ": the same degree as control;
"O": stronger or better than control;
"⊚": much stronger or much better than control.

The fatty acid or the fat and oil comprising the long-chain highly unsaturated fatty acid were used as such or diluted with PL oil to provide the following preparation oils.
① PL oil
② 1% AA/PL oil
③ 1% DHA/PL oil
④ 1% γ-linolenic acid/PL oil
⑤ AATG (AA content: 40%)
⑥ 10% AATG/PL oil (AA content: 4%)
⑦ DHA27G (DHA content: 27%)
⑧ 20% DHA27G (DHA content: 5.4%)

### Example 1

### Effect of improvement of body taste by vacuum steam distillate of oxidized long-chain highly unsaturated fatty acid (1)

Each of the preparation oils ① - ⑧ (0.5 g each) was added to water (500 g) and heated at 90°C for 30 min. The resulting mixture of water and the fat and oil was subjected to vacuum steam distillation (50°C, 160 mmHg) to give distillate (100 g). The resulting distillate was mixed with soybean paste ("Namamiso-mild," manufactured by HANANARUKI CO., LTD. and heated at 90°C for 5 min. to be served in the sensory test. As for the preparation oils ⑤ and ⑦, they were diluted after the distillation at a ratio of 0.5 g of the oil and 500 g of water, heated again at 90°C for 30 min and subjected to vacuum steam distillation to give distillate (100 g). The resulting distillate was then mixed with soybean paste and water in the same way. The resulting soybean soup was subjected to the sensory test and compared with soybean soup prepared from the preparation oil ① as a control.

**TABLE 1**

| Preparation Oil | ① | ② | ③ | ④ | ⑤ | ⑤ | ⑥ | ⑦ |
|---|---|---|---|---|---|---|---|---|
| Distillate (g) | 100 | 50 | 50 | 100 | 25 | 100 | 50 | 25 |
| Water (g) | 0 | 50 | 50 | 0 | 7 5 | 0 | 50 | 75 |
| Soybean Paste (g) | 12 | 12 | 12 | 12 | 12 | 12 | 12 | 12 |
| Strength of Taste | Δ | ⊚ | ⊚ | ⊚ | ⊚ | ⊚ | ⊚ | ⊚ |
| Goodness of Taste | Δ | ⊚ | ⊚ | ○ | ⊚ | × | ⊚ | ⊚ |
| Strength of Aftertaste | Δ | ⊚ | ⊚ | ○ | ⊚ | ⊚ | ⊚ | ⊚ |
| Goodness of Aftertaste | Δ | ⊚ | ⊚ | ○ | ⊚ | × | ⊚ | ⊚ |

**TABLE 2**

| Preparation Oil | ⑦ | ⑧ | Re-heating ⑤ | Re-heating ⑦ |
|---|---|---|---|---|
| Distillate (g) | 100 | 50 | 25 | 25 |
| Water (g) | 0 | 50 | 7 5 | 7 5 |
| Soybean Paste (g) | 1 2 | 12 | 12 | 1 2 |
| Strength of Taste | ⊚ | ⊚ | ⊚ | ⊚ |
| Goodness of Taste | × | ⊚ | ⊚ | ⊚ |
| Strength of Aftertaste | ⊚ | ⊚ | ⊚ | ⊚ |
| Goodness of Aftertaste | × | ⊚ | ⊚ | ⊚ |

The effect of improvement of body taste was obtained in the vacuum steam distillate of the oxidized fat and oil comprising the long-chain highly unsaturated fatty acid or in the vacuum steam distillate of the oxidized PL oil that had been mixed with the long-chain highly unsaturated fatty acid, when compared with the vacuum steam distillate of the oxidized PL oil.

The addition of an excess amount of the distillate would deteriorate the goodness of taste and aftertaste. The vacuum steam distillate after the re-heating of the vacuum steam distillate also showed the effect of improvement of body taste, confirming possibility of recycling of the long-chain highly unsaturated fatty acid.

### Example 2

### Effect of improvement of body taste by vacuum steam distillate of oxidized long-chain highly unsaturated fatty acid (2)

Each of he preparation oils ①, ⑥, and ⑧ (500g each) was heated at 120°C for 2 hours with stirring. The resulting fat and oil (10 g) was added to water (500g) and subjected to the vacuum steam distillation to give distillate (100 g). The resulting distillate was mixed with the soybean paste and water, and heated at 90°C for 5 min. The resulting soybean soup was subjected to the sensory test and compared with soybean soup prepared from the preparation oil ① as a control.

**TABLE 3**

| Preparation Oil | ① | ⑥ | ⑥ | ⑧ | ⑧ |
|---|---|---|---|---|---|
| Distillate (g) | 100 | 25 | 100 | 25 | 100 |
| Water (g) | 0 | 75 | 0 | 75 | 0 |
| Soybean Paste (g) | 1 2 | 1 2 | 12 | 12 | 1 2 |
| Strength of Taste | Δ | ⊚ | ⊚ | ⊚ | ⊚ |
| Goodness of Taste | Δ | ⊚ | × | ⊚ | × |
| Strength of Aftertaste | Δ | ⊚ | ⊚ | ⊚ | ⊚ |
| Goodness of Aftertaste | Δ | ⊚ | × | ⊚ | × |

The effect of improvement of body taste was obtained in the vacuum steam distillate of the oxidized fat and oil comprising the long-chain highly unsaturated fatty acid or in the vacuum steam distillate of the oxidized PL oil that had been mixed with the long-chain highly unsaturated fatty acid, when compared with the vacuum steam distillate of the oxidized PL oil. The addition of an excess amount of the distillate would deteriorate the goodness of taste and aftertaste.

### Example 3

### Effect of improvement of body taste by concentrate of the vacuum steam distillate of oxidized long-chain highly unsaturated fatty acid

Each of the preparation oils ①, ⑤ and ⑥ (0.5 g each) was added to water (500 g) and heated at 90 °C for 30 min. The resulting mixture of water and the fat and oil was subjected to vacuum steam distillation (50°C, 160 mmHg) to give distillate (100 g). Each of the preparation oils ①, ⑥, and ⑧ (500g each) was heated at 120°C for 2 hours with stirring. The resulting fat and oil (10g) was added to water (500g) and subjected to the vacuum steam distillation to give distillate (100 g). Each of the resulting distillate and control (100 g each) was mixed with dextrin (10 g of "SANNDEKKU100" by SANWA CORNSTARCH CO.,LTD) and lyophilized. After soybean paste (HANAMARUKI Co., Ltd.) and water was mixed at a ratio described in TABLE 4, they were heated at 90 °C for 5 min and mixed with each of the above lyophilized mixtures to give soybean soup. The resulting soybean soup was subjected to the sensory test with soybean soup prepared from the preparation oil ① as a control.

**TABLE 4**

| | | | | | | |
|---|---|---|---|---|---|---|
| Heating Temperature (° C) | 9 0 | 90 | 90 | 120 | 120 | 120 |
| Preparation Oil | ① | ⑤ | ⑥ | ① | ⑥ | ⑧ |
| Water (g) | 100 | 100 | 100 | 100 | 100 | 100 |
| Soybean Paste (g) | 1 2 | 1 2 | 1 2 | 1 2 | 12 | 1 2 |
| Dextrin Lyophilized Mixture (g) | 1 | 1 | 1 | 1 | 1 | 1 |
| Strength of Taste | Δ | ⊚ | ⊚ | Δ | ⊚ | ⊚ |
| Goodness of Taste | Δ | ⊚ | ⊚ | Δ | ⊚ | ⊚ |
| Strength of Aftertaste | Δ | ⊚ | ⊚ | Δ | ⊚ | ⊚ |
| Goodness of Aftertaste | Δ | ⊚ | ⊚ | Δ | ⊚ | ⊚ |

The effect of improvement of body taste was obtained in the concentrate by lyophilization of the mixture of dextrin and the vacuum steam distillate of th e oxidized fat and oil comprising the long-chain highly unsaturated fatty acid or in the same concentrate of the oxidized PL oil that had been mixed with the long-chain highly unsaturated fatty acid, when compared with the concentrate by lyophilization of the mixture of vacuum steam distillate of the oxidized PL oil with dextrin.

### Example 4

### Effect of improvement of body taste by water-extract of oxidized long-chain highly unsaturated fatty acid (1)

Each of the preparation oils ①, ⑥, and ⑧ (500g each) was heated at 120°C for 2 hours with stirring. The resulting fat and oil (200g) was added to water (100g) and stirred with an agitator at a room temperature for 30 min. Water phase obtained form the mixture of water and oil was mi xed with soybean paste, and heated at 90°C for 5 min. The resulting soybean soup was subjected to the sensory test and compared with soybean soup prepared from the preparation oil ① as a control.

**TABLE 5**

| Preparation Oil | ① | ⑥ | ⑧ |
|---|---|---|---|
| Extract (g) | 100 | 100 | 100 |
| Water (g) | 0 | 0 | 0 |
| Soybean Paste (g) | 1 2 | 1 2 | 1 2 |
| Strength of Taste | Δ | ○ | ○ |
| Goodness of Taste | Δ | ○ | ○ |
| Strength of Aftertaste | Δ | ○ | ○ |
| Goodness of Aftertaste | Δ | ○ | ○ |

The effect of improvement of body taste was obtained in the water extract of the oxidized PL oil that had been mixed with the long-chain highly unsaturated fatty acid, when compared with the water extract of the oxidized PL oil.

### Example 5

### Effect of improvement of body taste by water-extract of oxidized long-chain highly unsaturated fatty acid (2)

Each of the preparation oils ①, ⑥, and ⑧ (500g each) was added to water (100g) and refluxed at 98 ∼ 100°C for 6 hours with a vigorous stirring. The resulting water phase was mixed with consomme (Ajinomoto Co., Inc.), and heated at 90 °C for 5 min. The resulting soup was subjected to the sensory test and compared with soup prepared from the preparation oil ① as a control.

**TABLE 6**

| Preparation Oil | ① | ⑥ | ⑧ |
|---|---|---|---|
| Extract (g) | 100 | 100 | 100 |
| Water (g) | 0 | 0 | 0 |
| Consomme (g) | 2 | 2 | 2 |
| Strength of Taste | Δ | ○ | ○ |
| Goodness of Taste | Δ | ○ | ○ |
| Strength of Aftertaste | Δ | ○ | ○ |
| Goodness of Aftertaste | Δ | ○ | ○ |

### Example 6

### Effect of improvement of body taste by hydrous ethanol-extract of oxidized long-chain highly unsaturated fatty acid

Each of the preparation oils ①, ⑥, and ⑧ (500g each) was heated at 120°C for 2 hours with stirring. The resulting fat and oil (200g) was added to 25% hydrous ethanol (100g) and stirred with an agitator at a room temperature for 30 min. Water phase (containing alcohol) obtained form the mixture of water and oil was mixed with dextrin (10 g of "SANNDEKKU100" by SANWA CORNSTARCH CO.,LTD) and lyophilized. The above lyophilized product (0.5 g) was mixed with soybean paste (HANAMARUKI Co.,Ltd.) and water, heated at 90°C for 5 min. The resulting soybean soup was subjected to the sensory test and compared with soybean soup prepared from the preparation oil ① as a control.

**TABLE 7**

| Preparation Oil | ① | ⑥ | ⑧ |
|---|---|---|---|
| Lyophilized Product (g) | 0.5 | 0.5 | 0.5 |
| Water (g) | 100 | 100 | 100 |
| Soybean Paste (g) | 12 | 12 | 12 |
| Strength of Taste | Δ | ○ | ○ |
| Goodness of Taste | Δ | ○ | ○ |
| Strength of Aftertaste | Δ | ○ | ○ |
| Goodness of Aftertaste | Δ | ○ | ○ |

### Example 7

### Analysis of heated and extracted long-chain highly unsaturated fatty acid

The analysis was done in accordance with the following procedures.

The preparation oils ⑤ (0.5 g) was added to water (500 g) and heated at 90°C for 30 min. The resulting mixture of water and the fat and oil was subjected to vacuum steam distillation (50°C, 160 mmHg) to give distillate (100 g). The resulting distillate was subjected to "Pora Pack TypeQ 50-80Mesh (WATERS Corporation). The absorbed distillate (extract) of the long-chain highly unsaturated fatty acid was eluted with 100 ml of diethyl ether and dehydrated with anhydrous sodium sulfate. Nitrogen gas was blew into the diethyl ether solution so as to evaporate the same solution up to a final volume of about 1 ml and to concentrate the distillate of the long-chain highly unsaturated fatty acid. The resulting concentrate of the extract of the long-chain highly unsaturated fatty acid was subjected to analysis with GC-MS.

### [GC-MS analysis conditions]

Apparatus: GC:HP5890 (Hewlett Packard Co.), MS:HP5972(Hewlett Packard Co.)

Column: TC-WAX (GL-Science Co.) 0.25 mm I.D. x 60 m, df=0.25µm; Temperature-raising conditions: keeping at 40°C (5 min.), raising at 4°C/min, keeping at 200°C (10 min.);

The components were identified by comparing the resulting mass spectrum data with those of library (NBS75K, NIST Co.), or for unknown components with theoretical mass spectrum data of oxidatively decomposed substances that may possibly generate from the fatty acids constituting the above fat and acid and those described in articles (for example, Badings, H.T. Neth. Milk Dairy J., 24:145-256 (1970)).

**TABLE 8**

| Class | Compound |
|---|---|
| Aldehydes | Pentanal |
| | Hexanal |
| | 2-Heptenal |
| | 2-Octenal |
| | 2-Nonenal |
| | 4-Nonenal |
| | 2,4-Nonadienal |
| | 2,4-Decadienal |
| | 2,5-Undecadienal |
| | 3,6-Dodecadienal |
| | 2,4,7-Decatrienal |
| | 2,4,7-Tridecatrienal |
| Ketones | 2-Heptanone |
| | 3-Octanone |
| | 2-Octanone |
| | 3-Octen-2-one |
| | 2,3-Octanedione |
| | 4-Nonanone |
| Alcohols | 1-Octen-3-ol |
| | 2-Methyle-3-octanol |
| | 1,2-Heptanediol |
| Others | 2-Pentyl-Fran |

### Advantages of the invention

It is confirmed that the body taste improver of the present invention, comprising decomposed substances or their extract of the long-chain highly unsaturated fatty acid and/or the ester thereof shows the effect of a remarkable improvement of the body taste, and that the body taste improver of the present invention provides foods with the significant body taste, or rich or thick taste.

## Claims

1. A body taste improver comprising decomposed substances of a long-chain highly unsaturated fatty acid and/or an ester thereof.

2. A body taste improver comprising an extract of decomposed substances of a long-chain highly unsaturated fatty acid and/or an ester thereof.

3. A body taste improver consisting of decomposed substances of fat and oil composition comprising a long -chain highly unsaturated fatty acid and/or an ester thereof in an amount of 1% by weight or more.

4. A body taste improver consisting of an extract of decomposed substances of fat and oil composition comprising a long-chain highly unsaturated fatty acid and/or an ester thereof in an amount of 1% by weight or more.

5. A body taste improver according to anyone of Claim 1 - 4, wherein the long-chain highly unsaturated fatty acid is arachidonic acid or γ-linolenic acid.

6. A body taste improver according to anyone of Claim 1 - 5, wherein the decomposed substances or extract thereof comprises an aldehyde having 10- 15 carbon atoms.

7. A body taste improver according to Claim 6, wherein the decomposed substances or extract thereof comprises an aldehyde having two or more of double bonds.

8. A body taste improver according to Claim 6 or 7, which comprises 2,4,7-tridecatrienal.

9. A body taste improver according to anyone of Claim 1 - 8, wherein the long-chain highly unsaturated fatty acid is not derived from animal fat and oil.

10. A food comprising a body taste improver according to anyone of Claim 1 - 9.
